(19) Europäisches Patentamt
European Patent Office
Office européen des brevets

(11) **EP 4 530 033 A1**

(12) # EUROPEAN PATENT APPLICATION

(43) Date of publication:
**02.04.2025 Bulletin 2025/14**

(21) Application number: **24166222.0**

(22) Date of filing: **26.03.2024**

(51) International Patent Classification (IPC):
**B25J 15/00** (2006.01)     **H02N 13/00** (2006.01)

(52) Cooperative Patent Classification (CPC):
**B25J 15/0085; H02N 13/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 PT 2023118946**

(71) Applicant: **Engimotion - Engenharia Industrial Lda**
**4200-135 Porto (PT)**

(72) Inventors:
• **ÓRFÃO MARTINS REI, FILIPE MANUEL**
**4485-717 VILA CHÃ (PT)**
• **MAGALHÃES DA SILVA, ROBERTO JOSÉ**
**4440-348 SOBRADO (PT)**
• **ROSA FARIA, CARLA SOFIA**
**4740-103 APÚLIA ESPOSENDE (PT)**

(74) Representative: **Patentree**
**Edificio Net**
**Rua de Salazares, 842**
**4149-002 Porto (PT)**

(54) **ELECTROADHESIVE GRIPPER PAD AND MANUFACTURE METHOD THEREOF**

(57)    The present disclosure relates to an electroadhesive gripper, in particular, an electroadhesive gripper pad for gripping objects or materials comprising an insulating base layer, an electrode layer comprising two intertwined electrodes separated by a gap, arranged on the said dielectric layer, and a cured deposited dielectric filler arranged in the said gap and arranged to cover said dielectric layer. Also, a manufacture method of said electroadhesive gripper pad.

**Fig. 3**

EP 4 530 033 A1

## Description

### TECHNICAL FIELD

The present disclosure relates to an electroadhesive gripper, in particular to an electroadhesive gripper pad, and manufacture method thereof.

The gripper uses an electrostatic effect of astriction between two surfaces subjected to a polarized electrical field to generate a gripping. The electroadhesive gripper may also use electrical induction in conducting bodies to generate a gripping effect.

### BACKGROUND

Robots have been used these days to replace human workers in their repetitive, dangerous, and heavy tasks. However, the challenge is to do those tasks with at least the same quality and speed.

Robot development has several challenges, especially in how they interact with the surrounding environment.

One way of interaction is by using grippers that come into contact with a product. Here, there is a growing need for grippers that handle products with at least the same skill, care, and precision as a human hand.

It is equally important to have flexibility, i.e., that the same gripper handles different products, such as materials, configurations, dimensions, etc.

Electroadhesion technology handles every type of material, be it electrically conductive or insulating, rigid or flexible, air permeable or airtight. Thus, applying electroadhesion technology to a gripper to grip more sensitive materials, such as fabrics (e.g., LYCRA®, leather, carbon), glass, etc., without damaging or marking them.

Electroadhesion also solves the problem of energy efficiency, i.e., the energy that is consumed by the gripper using electroadhesion technology is lower. The energy consumed by this type of gripper is very low because once the force of attraction is at its maximum, the current flow can be stopped, and no additional energy is consumed, particularly for the cases of insulating materials given that they are quicker to stabilize the electric field than conducting materials.

Electroadhesion technology has also other advantages, e.g., it produces very low sound noise during operation.

The following topics show the disadvantages of other existing adhesive technologies.

- Chemical adhesion has difficulty catching objects with dusty surfaces and its durability is low.
- Suction cups do not grip porous materials as well as rough surfaces, with reasonable cost and low noise, and can promote contamination.
- Synthetic gecko has great difficulty adhering to dusty surfaces.
- Mechanical grippers have great difficulty adapting to the intrinsic variability of the product, as well as handling delicate objects.
- Needle grippers are widely used in the textile and food industries, but since they need to be pierced to manipulate, they always leave a mark on the product.
- Magnetic grippers cannot handle non-conductive objects, and their energy cost to move is high.

Electroadhesion is not effective for heavy-lifting applications, because it cannot create large forces.

Although some grippers already use electroadhesion to handle objects, the existing solutions are neither adjustable nor fast. Being just case-by-case solutions, customized to a specific type of product that the gripper is gripping according to a specific application. There is a need for a gripper with much more industrial capacity and adaptability.

These facts are disclosed to illustrate the technical problem addressed by the present disclosure.

### GENERAL DESCRIPTION

The present document discloses an electroadhesive gripper pad for gripping objects or materials, comprising: an insulating base layer; an electrode layer comprising two intertwined electrodes separated by a gap, arranged on said insulating base layer; and a cured, i.e., the toughening or hardening of a polymer material by cross-linking of polymer chains, deposited dielectric layer arranged in the said gap and arranged to cover said dielectric layer.

In an embodiment, the insulating base layer is made of acrylic, PET, or acetate for deforming in response to the application of a force.

In an embodiment, the insulating base layer is made of extruded or cast acrylic.

In an embodiment, the insulating base layer is a rigid base, in particular made of an acrylic or glass plate, or both the acrylic and the glass plate. The glass plate adheres particularly well with the thermoplastic PU or the conformal PU dielectric layer.

In an embodiment, the intertwined electrodes are made of aluminium, copper, or graphite.

In a particular embodiment, the graphite is applied by screen printing or, preferably, by cutting since the layer of graphite spread is too thin in screen printing.

A combination of graphite electrodes with an acrylic insulating base layer is particularly advantageous given that the graphite has a good adhesion to hydrophobic materials, such as acrylic.

In an embodiment, the intertwined electrodes are selected from a list comprising: interdigitated electrodes, interleaved electrodes, serpentine electrodes, helical electrodes, coaxial electrodes, mesh electrodes, grid electrodes, fractal electrodes, meander electrodes, or/and radial electrodes.

In an embodiment, the dielectric filler is made of silicone, polyurethane, or resin.

In an embodiment, the electroadhesive gripper pad further comprising a cover layer, preferably a conformal coating, more preferably a conformal Polyurethane layer, e.g., to protect the Resin PU or Thermoplastic PU.

It is further disclosed an electroadhesive gripper for gripping objects or materials comprising a plurality of electroadhesive gripper pads as described previously and an electronic data processor for selectively activating power supply for controlling the adhesive properties of the electroadhesive gripper.

It is also disclosed a manufacture method of the electroadhesive gripper pad, comprising the steps: providing the insulating base layer, applying the two intertwined electrodes on said insulating base layer to obtain an electrode layer; applying a liquid dielectric material for filling the gap between the two intertwined electrodes and covering at least a part of the electrode layer; solidifying the liquid dielectric material to obtain a cured, i.e., the toughening or hardening of a polymer material by cross-linking of polymer chains, deposited dielectric filler layer.

In an embodiment, the step of solidifying the liquid dielectric material comprises drying, or UV-curing, or curing in a vacuum chamber the liquid dielectric material, this is particularly advantageous to improve the dielectric resistance to arcing, further in particular to prevent the trapping of air bubbles inside of the dielectric material.

In an embodiment, the manufacture method further comprises the step of assembling an insulating base for the gripper.

## BRIEF DESCRIPTION OF THE DRAWINGS

The following figures provide preferred embodiments for illustrating the disclosure and should not be seen as limiting the scope of the invention.

**Figure 1:** Schematic representation of different configurations of interdigitated electrodes.

**Figure 2:** Schematic representation of interdigitated electrodes with a sinusoidal configuration.

**Figure 3:** Schematic representation of an embodiment of an electroadhesive gripper pad.

**Figure 4:** Diagram of the manufacture procedure for an electroadhesive gripper pad.

**Figure 5A:** Schematic representation of a cross-section of an electroadhesive gripper pad, after preparing the insulating base layer.

**Figure 5B:** Schematic representation of a cross-section of an electroadhesive gripper pad, after applying the electrode layer.

**Figure 5C:** Schematic representation of a cross-section of an electroadhesive gripper pad, after applying an inner dielectric filler.

**Figure 5D:** Schematic representation of a cross-section of an electroadhesive gripper pad, after applying an outer dielectric layer.

**Figure 6A:** Schematic representation of a cross-section of an embodiment of an electroadhesive gripper pad, with an active magnetic field.

**Figure 6B:** Schematic representation of the electroadhesive gripper pad with the respective combs of each electrode.

**Figure 7A:** Comparative data chart of the maximum dielectric strength of dielectric layers achieved per tested component.

**Figure 7B:** Comparative data chart of the maximum dielectric strength of the insulating base layer achieved per tested component.

**Figure 7C:** Comparative data chart of the maximum electric resistivity of the electrode layer achieved per tested component.

## DETAILED DESCRIPTION

The present document discloses an electroadhesive gripper pad for gripping objects or materials by electrostatic attraction. Electroadhesion works by an electrostatic attraction between two materials in contact when there is an electrical potential difference between them. Therefore, an electroadhesive gripper comprises a plurality of an electroadhesive pad, which is intended to grip objects or materials by electrostatic attraction.

The electroadhesive gripper grips sensitive, valuable, and distinct materials, such as fabrics, leather, crystals, etc., without marking or damaging them.

The present disclosure also relates to a structure and manufacture method of the electroadhesive pad.

In an embodiment, the electroadhesive pad comprises an insulating base layer, an electrode layer and a dielectric filler, preferably, two dielectric layers, two interdigitated electrodes, and an insulating base layer.

In the disclosure, the two interdigitated electrodes are embedded as a layer between the outer dielectric layer and the insulating base layer. They are separated by a gap, filled with one dielectric (inner layer).

In an embodiment, the interdigitated electrodes have a sinusoidal configuration.

In an embodiment, the gripping effectiveness is adjusted by the thickness of the dielectric and insulator layers, the configuration of the two electrodes and their area.

The insulated electrodes generate an electric field when they are powered by high voltage, preferably, a voltage between 1kV and 25 kV.

The insulator and dielectric layers act as an inhibitor to prevent electrical conductance, without it, it can lead to electrical interruption during operation and short circuits between parts.

In an embodiment, the electrode is an electrically conductive material, such as copper, gold, silver oxide, graphite, or aluminium.

In an embodiment, the insulating base comprises a glass, or PMMA, sheet. The selection is made depending on the intended dielectric rigidity, as well as the planned working conditions.

In an embodiment, the dielectric layer comprises a flexible polymer coating as silicone, resin, or polyurethane (PU). The selection takes into account the expected operating conditions for the gripper.

There are two main types of materials to grip: conductors and insulators. Each needs a different electroadhesive solution, exploiting different phenomena. Although these solutions work in different ways, both require a high voltage between the two electrodes of the electroadhesive pad.

A first phenomenon of Electric Polarization refers to the attractive forces between opposite electrical charges. When two objects have opposite charges, i.e., electric polarization, they experience an attractive force that holds them together. In the context of electroadhesion, this phenomenon is utilized by applying an electric charge to one object and inducing an opposite charge on the other object. The resulting electrostatic attraction between the charged objects causes them to adhere to each other.

A second phenomenon of Electric Induction is the force of attraction between electrically charged objects. When an object is charged, it creates an electric field around it. If another object with an opposite charge or a neutral object is brought into the vicinity of this electric field, the charged object exerts a force of attraction on the other object, i.e., electric induction. In the case of electroadhesion, an electric charge is applied to one surface, and the opposite charge or a neutral surface is brought close to it. The electrostatic attraction between the charged surface and the opposite/neutral surface results in adhesion.

The value of high voltage used influences directly the attraction force. Conversely, the use of higher attraction forces implies longer delivery/drop times of the adhered material or object.

In an embodiment, the electroadhesive gripper pad comprises an outer dielectric layer which contacts the adhered material.

It is further disclosed, a method of manufacturing the electroadhesive pad, described in any of the previously disclosed embodiments, comprising the steps:

Provide the insulating base layer, with the defined dimensions and properly prepared;
Application of the electrode layer over the insulating base layer, according to the defined configuration;
Application of the inner dielectric layer to fill the empty gap between the two interdigitated electrodes;
Wait until the inner dielectric cures completely;
Application of the outer dielectric layer over the electrode and inner dielectric layer, to cover the entire area of the insulating base layer;

Wait until the outer dielectric cures completely.

A fully operational electro-adhesive pad requires the use of specific materials, applied in a rigid sequence, using the appropriate technics, and fulfilling a specific duration per operation and product.

In an embodiment, the electrode layer is applied by: Cut out; Stencil; or Silkscreen.

In an embodiment, the dielectric layers are applied by: Spraying; Brushing; Dip coating; Controlled spill.

In a particular embodiment, the curing process takes place in a vacuum chamber with an automatically controlled temperature system.

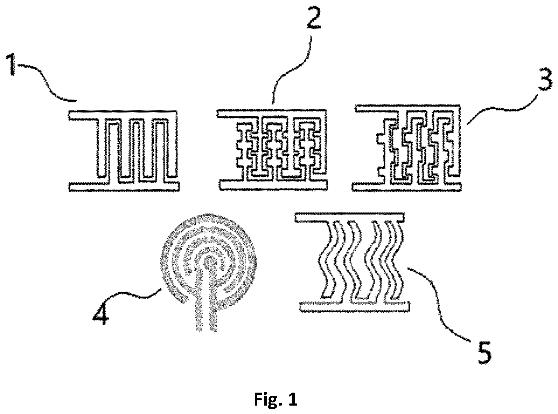

**Figure 1** exposes a schematic representation of different configurations of interdigitated electrodes. Where **1** represents a basic configuration of interdigitated straight electrodes, **2** represents an in-phase teeth configuration, **3** represents an outof-phase teeth configuration, **4** represents an interdigitated concentric circles configuration, and **5** represents an interdigitated sinusoidal configuration.

The interdigitated straight electrodes and the in-phase/out-of-phase teeth configurations have 90 degrees angles. During normal operation, at these points, there is a special concentration of electrical pressure against the dielectric and insulating base, layers, which is more propitious to a dielectric breakdown. Because of this, concentric circles and sinusoidal configurations are more effective and reliable.

In an embodiment, the interdigitated straight electrodes and the in-phase/out-of-phase teeth are configured with rounded corners. The dielectric breakdown value of these configurations increased slightly comparing with the 90 degrees angles configuration, nevertheless it is still far from the value achieved by the concentric circles and sinusoidal configuration.

In another embodiment, the sinusoidal configuration when compared to the other configurations, under the same normal operation conditions, presents a superior grip performance, operating the same non-conductive materials. However, this configuration reveals itself be the most difficult in terms of production process.

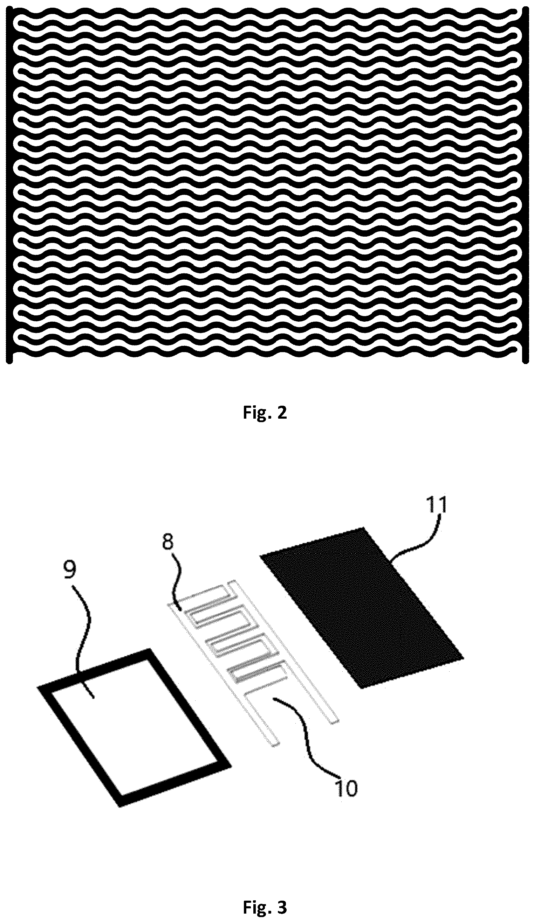

**Figure 2** exposes a schematic representation of interdigitated electrodes with sinusoidal configuration where all the electrodes edges are round-shaped, and there are no operational right angles.

With this configuration, a similar electrical pressure is achieved across the entire pad area, avoiding unexpected dielectric breakdowns.

In an embodiment, the sinusoidal configuration, under normal operating conditions, presents a more efficient, smoother and easier displacement of charges in the material to be gripped, due to its waveform and larger electrode area, which results in more effective gripping power.

In an embodiment, depending on the material to be attracted and the final application, a gripper can have multiple pads, e.g. it can have one or two or four or even six pads. So, it is necessary to maintain the proportion, as well as the minimum width of the electrodes and the gap between them at 2mm.

**Figure 3** exposes a schematic representation of an embodiment of an electroadhesive pad, where **8** represents an electrode layer, **9** represents an insulating base layer, **10** represents an inner dielectric layer, and **11** represents the outer dielectric layer.

In an embodiment, the sequence of assembly is: placing the insulating base layer **(9)** on the electrode layer **(8),** then filling with an inner dielectric layer **(10),** and placing an outer dielectric layer **(11).**

In an embodiment, the insulating base layer **(9)** is rigid or flexible, undamaged, and with a smooth surface.

In another embodiment, the inner dielectric layer **(10)** is applied to fill the gap between the electrodes **(8),** and the outer dielectric layer (11) covers the electrodes.

In order to assure the best operability of the electromagnetic pad, by having a minimal number imperfections in the dielectric layers (**10** and **11**), as bubbles and nonlinear finish surfaces the inner dielectric layer is poured at a slow rate.

In an embodiment, the minimum thickness for each layer are:

**8, 10** - Electrode and inner dielectric layer: 0.1mm;
**9** - Insulating base layer: 3mm;
**11 -** Outer dielectric layer: 0.5mm.

In an embodiment, the electrode layer has a smaller area than the insulating base layer for ensuring a minimum surrounding clearance, preferably of 5mm around the electrode.

In an embodiment, the dielectric layers must have the same dimension as the insulating base layer.

In an embodiment, the electrode layer **(8)** is made with at least one material in a solid, liquid, or even pasty state. The selection of the material depends on the selected application method, e.g., screen printing or cutting.

In an embodiment, the application of the dielectric layer **(10)** on the electrode layer **(8)** requires it to be in a liquid state and the use of a specific controlled tool, depending on the selected application method, e.g., a rolling mill for cutting or a squeegee for screen printing.

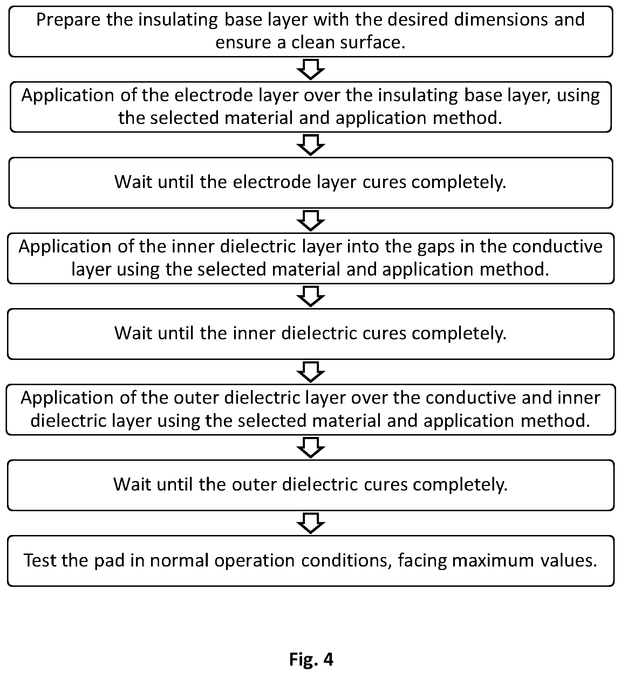

**Figure 4** shows a diagram of the manufacturing procedure for the electroadhesive pad.

In an embodiment, the electrodes are dried in the oven at 25°C - 31°C for 2 days.

In an embodiment, the dielectric material, e.g., thermoplastic PU, is dried in the oven at 25°C - 31°C and cured in the vacuum chamber, preferably in the following steps: curing in the vacuum chamber for 2 days at 22°C, drying in the oven for 2 days at 25°C - 31°C, for the inner dielectric layer, and repeat the same steps for the outer dielectric layer.

In an embodiment, a further dielectric material as a cover layer, e.g., conformal PU, is dried in the vacuum chamber for 3 days at 22°C, and in the oven for 2 days at 25°C - 31°C.

In an embodiment, the curing step comprises at least one drying temperature stage, dividing the total curing time into the same number of stages, i.e., equal temperature steps between each curing steps.

In an embodiment, in between each curing and/or drying step, the pad rests on a levelled base for 24h to 48h.

In an embodiment, the material selected for the inner and the outer dielectric layer is the same.

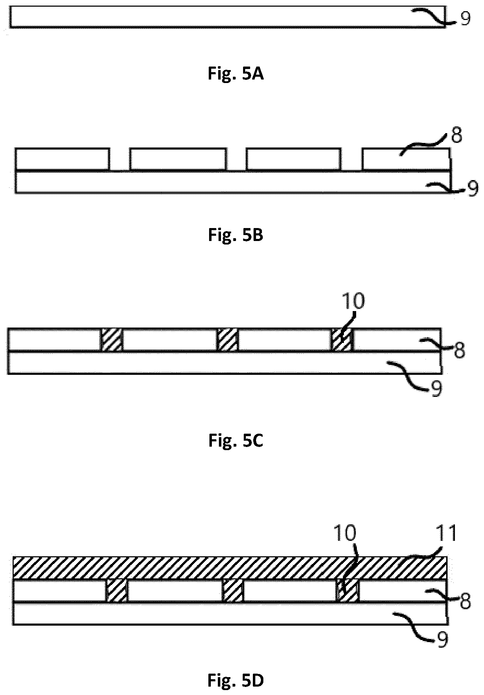

**Figure 5A** shows a cross-section of the electroadhesive pad, after preparing the insulating base layer **(9)**, corresponding to a first step of the manufacturing procedure. When the insulating base layer **(9)** is prepared to receive the electrode layer.

**Figure 5B** shows a cross-section of the electroadhesive pad, after applying the electrode layer **(8)** over the insulating base layer **(9)** and ready for curing, corresponding to a second step of the manufacturing procedure.

**Figure 5C** shows a cross-section of the electroadhesive pad after the dielectric filler **(10)** was applied to fill the empty spaces of in between the electrodes of the electrode layer **(8),** corresponding to a fourth step of the manufacturing procedure. and ready for curing.

**Figure 5D** shows a cross-section of the electroadhesive pad, after the outer layer **(8)** was applied over the conductive and inner layer **(9)** and ready for final curing in the sixth stage of the manufacturing procedure.

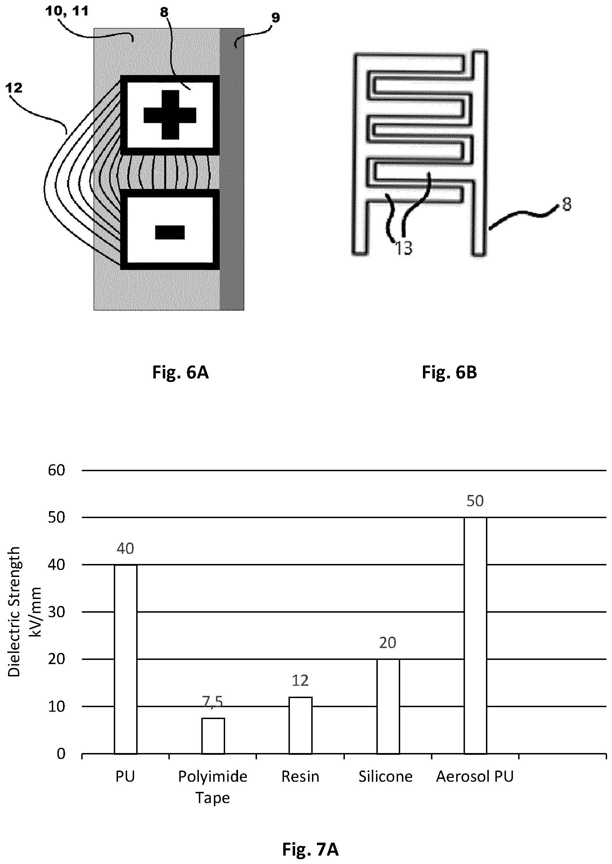

**Figure 6A** shows a cross-section of an electro-adhesive pad in full operation, after completing all stages of the manufacturing procedure.

**Figure 6B** shows a schematic representation of the electroadhesive gripper pad with the respective combs of each electrode.

In an embodiment, electroadhesive pads have an operating model identical to a parallel multi-plate capacitor.

The capacitor is a component that has the ability or "capacity" to store energy in the form of an electrical charge producing a potential difference (Static Voltage) across its plates.

When a non-conductive object is being gripped, it acts as part of this model.

In an embodiment, the gripping capacity of the pad is directly related to the created magnetic field (12), which directly depends on the capacitance of the pad.

In an embodiment, the capacitance (C) equation considered for a parallel-plate capacitor is:

$$C = \frac{Q}{V} = \frac{Q}{Qd/\varepsilon A}$$

Where Q means the stored charges, V is the voltage applied between conductors, d is the separation distance between conductors, A the surface area of the conductor, $\varepsilon$ the absolute permittivity of the dielectric material being used.

In an embodiment, to increase the overall capacitance of the electroadhesive pad, while maintaining its size, is to have on the two electrodes more interdigitated combs, thus increasing the surface area (A).

On the electroadhesive pad, as shown in Figure 6B, the left electrode has 4 combs and the right electrode has 3 combs. So, since the number of combs in the electroadhesive pad is 7, we can say that n=7, where "n" represents the number of combs.

So, the equation to calculate the capacitance of the electroadhesive pad should be:

$$C = \frac{\varepsilon(n-1)A}{d}$$

The dielectric material is placed between the electrodes to increase their capacitance. One can establish a dielectric constant for each type of material.

$$K = \frac{C}{C_0}$$

Therefore, there is a dependency between the materials of the dielectric layer, the inner and outer dielectric layer, and the object that is to be picked up.

$$k = k_{base} + k_{dielectric} + k_{object}$$

The permittivity in the dielectric can be defined as a function of the permittivity in a vacuum and the dielectric constant.

$$\varepsilon_r = K\varepsilon_0$$

Thus, the capacitance equation for capacitors in parallel can also be as follows:

$$C = K\varepsilon_0 \frac{A}{d}$$

The higher the dielectric constant the higher the capacitance, and therefore the higher the magnetic field.

One factor that negatively affects the operation of the electroadhesive pad is dielectric leakage. It is assumed that the electrical resistance of the dielectric is extremely high and that it is a good insulator that blocks the flow of direct current at the electrodes. However, if the dielectric material is damaged due to excessive voltage, the leakage current through the dielectric will become extremely high, resulting in a rapid loss of charge at the electrodes, which will eventually fail the electroadhesive pad.

In an embodiment, to prevent dielectric leakage, the dielectric constant of the dielectric layer material and the inner and outer dielectric layers must be high. The dielectric layer or the inner and outer dielectric layers can be made of many dielectric materials or a combination of these materials so that the total dielectric constant (of the 3 layers) is as high as possible so that excess voltage does not break the electroadhesive pad.

**Figure 7A** shows comparative data chart of the: maximum dielectric strength of dielectric layers achieved per tested component.

In an embodiment, polyurethane (PU) is the dielectric material given that it is a good insulator, and it does not break up to 40kV.

In an embodiment, the polyimide tape over-insulates by not allowing the electric field to be created in the electroadhesive pad.

In an embodiment, the resin is the dielectric material given that resin epoxy is a good dielectric material although it loses its dielectric properties after a predetermined period of time.

The formation of small bubbles created by the liquid silicone is a problem, because the bubbles cause electrical leakage and then rupture of the electroadhesive pad.

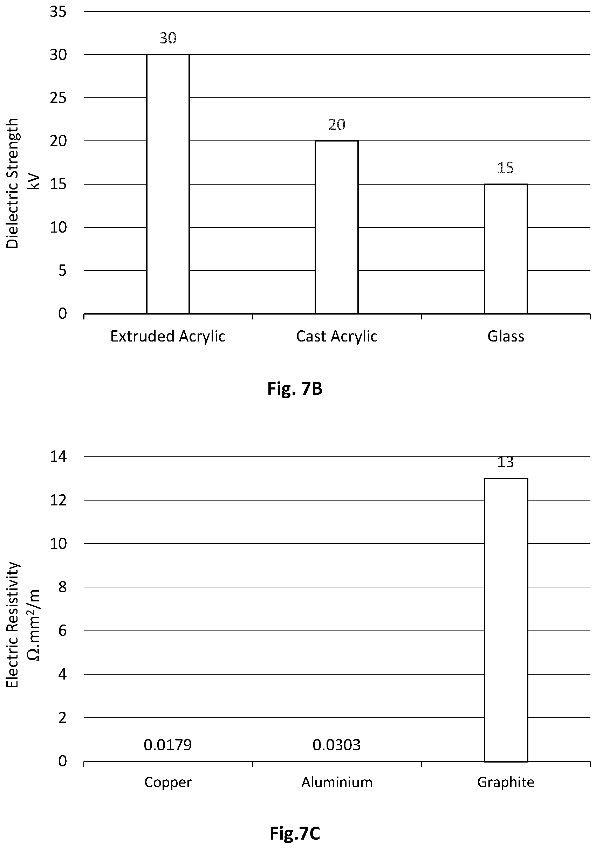

**Figure 7B** shows comparative data chart of the maximum dielectric strength of the insulating base layer achieved per tested component.

In an embodiment, the base layer is made of acrylic, in particular, cast acrylic or extruded acrylic which has a higher dielectric strength than cast acrylic. Despite this, the cast acrylic cannot have good adhesion with the dielectric layer.

In an embodiment, the base layer is made of glass which has less durability, strength, and dielectric strength than extruded and cast acrylic.

In an embodiment, the outer dielectric layer is made of an electroadhesive material capable of generating an adhesion force upon the application of an electrical voltage to the electrodes.

**Figure 7C** shows comparative data chart of the maximum electric resistivity of the electrode layer achieved per tested component.

In an embodiment, the higher the electric resistivity, the higher the flow of electric current in the conducting material.

In an embodiment, graphite shows better results as an electrode material compared to aluminium and copper.

Table I - two illustrative recipes for making the electroadhesive pad.

| Recipe ID | Base Layer | Electrodes | Dielectric Layers |
|---|---|---|---|
| 1 | Extruded Acrylic or Glass | Graphite | PU Resin + Conformal PU |
| 2 | Extruded Acrylic or Glass | Graphite | Thermoplastic PU + Conformal PU |

In an embodiment, the electroadhesive pad is made of a Glass or Extruded Acrylic for the insulating base layer; Graphite (paste) for the electrodes; Polyurethane composite (PU Resin + Conformal PU or Thermoplastic PU + Conformal PU) for the Dielectric Layer.

In an embodiment, in both recipes, the electrodes were applied by the cutout. When the electrodes are applied by silkscreen, there is less strength in the electroadhesive pad, because there is less graphite thickness.

In an embodiment, the Thermoplastic PU has a dielectric strength of 70.9kV, the Resin PU of 50kV, and the Conformal PU of 42.6kV.

In an embodiment, the Resin PU and the Conformal PU work well together. The Resin PU creates small bubbles that burst while drying, and the application of Conformal PU, on top of the Resin PU layer, eventually covers up the areas that have been left open due to the aforementioned bursting effect.

In an embodiment, of all the tests performed, Resin PU has better adhesion with extruded acrylic.

In an embodiment, the Thermoplastic PU works in the same way as the Resin PU.

In an embodiment, the Thermoplastic PU with glass performs well with heavy materials, because glass has a higher rigidity/hardness than extruded acrylic.

This electroadhesion technology has been bringing technical improvements that can bring advantages to the industrial community, as well as to other sectors and applications. This document includes how the electroadhesion works and the manufacturing of the electroadhesive pad. The following topics show the main features of this product compared to others that already exist are:

- Delicate and contamination-free: this electroadhesive gripper allows the handling of delicate and valuable objects efficiently and safely, without creating damage, marks, or even stains.
- Adaptability: It allows the electroadhesive pad to be independent of the material structure of the part to handle. So, porous and flexible parts are no longer a problem.
- Versatility: It allows the electroadhesive pad can handle different materials or surfaces, with varying configurations and dimensions, single layer or multilayer.
- Robustness: Even when this product, an electroadhesive gripper, faces harsh situations, such as rough surfaces, wet materials, dusty settings, low pressure, and temperature conditions, the equipped system will maintain the task success level, with no wear.
- Low weight and compact: It's easily applied in a system using materials and structures that are mechanically simple and lightweight, reducing system complexity.
- High forces: It's very efficient when comparing the attraction force generated per contact area (up to 1.1N per $10mm^2$), keeping the rest of the advantages unchanged.
- Fast Response: This product is very independent of the part to be handled, achieving a minimum pick and place waiting time of 0.2 seconds.
- Silence: This product works without creating any additional noise because the generated sound will be out of hearing range.

This solution is focused on both non-conductive and conductive materials, due to the creation of a magnetic field in the electroadhesive pad. Several materials have been tested to manufacture the electroadhesive pad to improve its effectiveness and to have a fast and controlled delivery of the handled part to the delivery point.

The term "comprising" whenever used in this document is intended to indicate the presence of stated features, integers, steps, and components, but not to preclude the presence or addition of one or more other features, integers, steps, components, or groups thereof.

The disclosure should not be seen in any way restricted to the embodiments described and a person with ordinary skill in the art will foresee many possibilities for modifications thereof. The above-described embodiments are combinable.

The following claims further set out particular embodiments of the disclosure.

**Claims**

1. Electroadhesive gripper pad for gripping objects or materials, comprising:

   an insulating base layer;
   an electrode layer comprising two intertwined electrodes separated by a gap arranged on said insulating base layer; and
   a cured deposited dielectric layer arranged in the said electrode gap and arranged to cover said electrode layer.

2. Electroadhesive gripper pad according to the previous claim wherein the insulating base layer is made of extruded or cast acrylic, PET, glass, or acetate for deforming in response to the application of a force.

3. Electroadhesive gripper pad according to any of the previous claims wherein the intertwined electrodes are made of aluminium, copper, or graphite.

4. Electroadhesive gripper pad according to the previous claim wherein the graphite is applied by screen printing or by cutting.

5. Electroadhesive gripper pad according to any of the previous claims wherein the intertwined electrodes are selected from a list comprising: interdigitated electrodes, interleaved electrodes, serpentine electrodes, helical electrodes, coaxial electrodes, mesh electrodes, grid electrodes, fractal electrodes, meander electrodes, or/and radial electrodes.

6. Electroadhesive gripper pad according to any of the previous claims wherein the dielectric filler is made of silicone, polyurethane, or resin.

7. Electroadhesive gripper pad according to any of the previous claims further comprising a cover layer, preferably a conformal coating, more preferably a conformal Polyurethane layer.

8. Electroadhesive gripper for gripping objects or materials comprising a plurality of electroadhesive gripper pads as described in any of the previous claims and an electronic data processor for selectively activating power supply for controlling the adhesive properties of the electroadhesive gripper.

9. Manufacturing method of the electroadhesive gripper pad according to any of the claims 1-9, comprising the steps:

   providing the insulating base layer,
   applying the two intertwined electrodes on said insulating base layer to obtain an electrode layer;
   applying a liquid dielectric material for filling the gap between the two intertwined electrodes and covering at least a part of the electrode layer;
   solidifying the liquid dielectric material to obtain a cured deposited dielectric filler layer.

10. Manufacturing method according to the previous claim wherein the step of solidifying the liquid dielectric material comprises drying or curing the liquid dielectric material in a vacuum chamber.

11. Manufacturing method, according to the previous claim, comprises the further step of assembling an insulating base layer for the gripper.

**Fig. 1**

**Fig. 2**

**Fig. 3**

Prepare the insulating base layer with the desired dimensions and ensure a clean surface.

⇩

Application of the electrode layer over the insulating base layer, using the selected material and application method.

⇩

Wait until the electrode layer cures completely.

⇩

Application of the inner dielectric layer into the gaps in the conductive layer using the selected material and application method.

⇩

Wait until the inner dielectric cures completely.

⇩

Application of the outer dielectric layer over the conductive and inner dielectric layer using the selected material and application method.

⇩

Wait until the outer dielectric cures completely.

⇩

Test the pad in normal operation conditions, facing maximum values.

**Fig. 4**

Fig. 5A

Fig. 5B

Fig. 5C

Fig. 5D

10, 11    8    9

12

$+$

$-$

13    8

**Fig. 6A**    **Fig. 6B**

**Fig. 7A**

**Fig. 7B**

**Fig.7C**

**EUROPEAN SEARCH REPORT**

Application Number

EP 24 16 6222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | GB 2 552 450 A (AYLESBURY AUTOMATION LTD [GB]) 31 January 2018 (2018-01-31)<br>* page 1 - page 5; figures 1-5 * | 1,2,5,7,<br>9,11<br>8,10 | INV.<br>B25J15/00<br>H02N13/00 |
| Y | US 10 780 589 B2 (DAWOO FA CO LTD [KR]; DAEGU GYEONGBUK INST SCIENCE & TECH [KR] ET AL.) 22 September 2020 (2020-09-22)<br>* figures 5-6 * | 8 | |
| Y | US 2009/161285 A1 (ABOUAF MARC [US] ET AL) 25 June 2009 (2009-06-25)<br>* paragraph [0042] * | 10 | |
| X<br>Y<br>A | KR 102 290 115 B1 (KOREA INST IND TECH [KR]) 17 August 2021 (2021-08-17)<br>* paragraphs [0070] - [0076], [0080]; figures 7-8 * | 1-3,5,9<br>4<br>8 | |
| Y | EP 4 140 666 A1 (ECOLE POLYTECHNIQUE FED LAUSANNE EPFL [CH]) 1 March 2023 (2023-03-01)<br>* paragraph [0034] * | 4 | |
| | | | TECHNICAL FIELDS SEARCHED (IPC) |
| X<br><br><br><br><br><br><br><br><br><br><br>A | GUO J ET AL: "Soft pneumatic grippers embedded with stretchable electroadhesion",<br>SMART MATERIALS AND STRUCTURES, IOP PUBLISHING LTD., BRISTOL, GB,<br>vol. 27, no. 5, 27 March 2018 (2018-03-27) , page 55006, XP020326593,<br>ISSN: 0964-1726, DOI:<br>10.1088/1361-665X/AAB579<br>[retrieved on 2018-03-27]<br>* figures 1-11 * | 1,5,6<br><br><br><br><br><br><br><br><br><br><br>8 | B25J<br>H02N<br>H01L |

-/--

The present search report has been drawn up for all claims

| Place of search | Date of completion of the search | Examiner |
|---|---|---|
| Munich | 10 August 2024 | Champion, Jérôme |

Europäisches
Patentamt

European
Patent Office

Office européen
des brevets

## EUROPEAN SEARCH REPORT

Application Number

EP 24 16 6222

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/179123 A1 (BAIN DAVID M [AU] ET AL) 8 June 2023 (2023-06-08) | 1,2,5 | |
| A | * paragraphs [0044] - [0045]; figures 1-7 * | 8 | |
| | ----- | | |
| X | CASELLI M ET AL: "Experimental characterization of a multilayer silicone-based electroactive patch for gripper applications", PROCEEDINGS OF THE SPIE, SPIE, US, vol. 11587, 22 March 2021 (2021-03-22), pages 115871S-115871S, XP060143213, ISSN: 0277-786X, DOI: 10.1117/12.2582950 ISBN: 978-1-5106-5738-0 * paragraph [02.2]; figure 1 * | 1,5,6 | |
| | ----- | | |
| X | GB 2 354 114 A (MONKMAN GARETH JOHN [DE]) 14 March 2001 (2001-03-14) | 1,5 | |
| A | * the whole document * | 8 | |
| | ----- | | |
| A | EP 2 286 448 B1 (ENTEGRIS INC [US]) 28 November 2018 (2018-11-28) * paragraph [0072] * | 7 | TECHNICAL FIELDS SEARCHED (IPC) |
| | ----- | | |

The present search report has been drawn up for all claims

| Place of search | Date of completion of the search | Examiner |
|---|---|---|
| Munich | 10 August 2024 | Champion, Jérôme |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 6222

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2024

| Patent document cited in search report | | Publication date | Patent family member(s) | | Publication date |
|---|---|---|---|---|---|
| GB 2552450 | A | 31-01-2018 | GB 2552450 A | | 31-01-2018 |
| | | | WO 2017199035 A1 | | 23-11-2017 |
| US 10780589 | B2 | 22-09-2020 | KR 20200009872 A | | 30-01-2020 |
| | | | US 2020023527 A1 | | 23-01-2020 |
| US 2009161285 | A1 | 25-06-2009 | CN 101884161 A | | 10-11-2010 |
| | | | EP 2232693 A2 | | 29-09-2010 |
| | | | JP 2011505789 A | | 24-02-2011 |
| | | | KR 20100101641 A | | 17-09-2010 |
| | | | TW 200935555 A | | 16-08-2009 |
| | | | US 2009161285 A1 | | 25-06-2009 |
| | | | WO 2009085991 A2 | | 09-07-2009 |
| KR 102290115 | B1 | 17-08-2021 | NONE | | |
| EP 4140666 | A1 | 01-03-2023 | NONE | | |
| US 2023179123 | A1 | 08-06-2023 | AU 2022271464 A1 | | 22-06-2023 |
| | | | EP 4194156 A1 | | 14-06-2023 |
| | | | US 2023179123 A1 | | 08-06-2023 |
| GB 2354114 | A | 14-03-2001 | NONE | | |
| EP 2286448 | B1 | 28-11-2018 | CN 102067302 A | | 18-05-2011 |
| | | | CN 103236413 A | | 07-08-2013 |
| | | | EP 2286448 A1 | | 23-02-2011 |
| | | | JP 5492875 B2 | | 14-05-2014 |
| | | | JP 2011521470 A | | 21-07-2011 |
| | | | KR 20110020269 A | | 02-03-2011 |
| | | | SG 190668 A1 | | 28-06-2013 |
| | | | TW 200949897 A | | 01-12-2009 |
| | | | US 2009284894 A1 | | 19-11-2009 |
| | | | US 2017098568 A1 | | 06-04-2017 |
| | | | WO 2009142710 A1 | | 26-11-2009 |

EPO FORM P0459

For more details about this annex : see Official Journal of the European Patent Office, No. 12/82